# EUROPÄISCHE PATENTSCHRIFT

(11) **EP 2 585 327 B1**
(45) Veröffentlichungstag und Bekanntmachung des Hinweises auf die Patenterteilung: **06.04.2016**
(21) Anmeldenummer: 11727927.3
(22) Anmeldetag: 24.06.2011
(51) Int. Cl.: B60K 6/383, B60K 6/48

(54) **ANTRIEBSSTRANG**
DRIVE TRAIN
CHAÎNE CINÉMATIQUE

(30) Priorität: 28.06.2010 US 358981 P
(43) Veröffentlichungstag der Anmeldung: 01.05.2013
(73) Patentinhaber: Magna Steyr Fahrzeugtechnik AG & Co KG, 8041 Graz (AT)
(72) Erfinder: ERJAWETZ, Konstantin, 8570 Voitsberg (AT); KRIEGLER, Wolfgang, A-8051 Graz (AT); TEUSCHL, Gerald, 76761 Rülzheim (DE)
(74) Vertreter: Zangger, Bernd
(86) Internationale Anmeldenummer: PCT/EP2011/003121
(87) Internationale Veröffentlichungsnummer: WO 2012/000630

(56) Entgegenhaltungen:
- EP-A1- 0 724 978
- EP-A1- 2 050 608
- DE-A1- 10 045 533
- DE-A1-102007 043 737
- DE-A1-102007 061 895

## Beschreibung

Die vorliegende Erfindung betrifft einen Antriebsstrang eines Kraftfahrzeugs mit einer Verbrennungskraftmaschine und mit einer elektrischen Maschine.

Aus DE 10045 533 ist ein Antriebsstrang nach dem Oberbegriff des Anspruchs 1 bekannt.

Grundsätzlich sind verschiedenste Arten von Hybridarchitekturen eines Antriebsstrangs eines Kraftfahrzeugs bekannt, durch die eine Verbrennungskraftmaschinen und eine elektrische Maschine miteinander kombiniert werden, um einen effizienten Antrieb des Kraftfahrzeugs zu ermöglichen. Im Allgemeinen unterscheidet man zwischen drei verschiedenen Hybridisierungsstufen, die sich bezüglich des Beitrags von Antriebsdrehmoment durch die elektrische Maschine unterscheiden.

Bei so genannten Mikrohybridfahrzeugen ist in der Regel eine elektrische Maschine für eine Start-Stopp-Automatik und eine Bremsenergierückgewinnung zum Laden einer vergleichsweise kleinen Starterbatterie vorgesehen. Die elektrische Maschine wird dabei nicht zum Antrieb des Fahrzeugs genutzt.

Bei so genannten Mildhybriden unterstützt die elektrische Maschine hingegen die Verbrennungskraftmaschine zur Leistungssteigerung. Außerdem kann bei geeigneter Auslegung des Antriebsstrangs die bei einem Bremsvorgang anfallende Energie in einem Generatorbetrieb der elektrischen Maschine teilweise wiedergewonnen werden.

Im Gegensatz zu den vorstehend beschriebenen Hybridisierungsstufen sind Vollhybridfahrzeuge in der Lage, vollständig durch die elektrische Maschine angetrieben zu werden. Bei derartigen Fahrzeugen kann es beispielsweise vorgesehen sein, dass die Verbrennungskraftmaschine lediglich einen elektrischen Generator antreibt, der die elektrische Maschine mit elektrischer Energie versorgt und/oder eine Batterie lädt. Es kann daher eine kleiner dimensionierte Verbrennungskraftmaschine verwendet werden als bei Kraftfahrzeugen mit vergleichbaren Leistungsdaten. Über-dies kann der Verbrennungsmotor in einem effizienten Betriebszustand betrieben werden, da Leistungsspitzen im Regelfall durch Energieentnahme aus der Batterie abgedeckt werden können.

Es sind Hybridarchitekturen bekannt, bei denen ein Elektromotor und eine Verbrennungskraftmaschine über eine oder zwei Kupplungen miteinander bzw. mit dem Antriebsstrang verbunden sind. Nachteilig sind insbesondere bei Architekturen mit zwei Kupplungen die aufwendige Gestaltung der Kupplungen und die funktionale und geometrische Integration des Elektromotors in den Antriebsstrang. Auch die Steuerung des Systems ist vergleichsweise komplex.

Es ist daher eine Aufgabe der vorliegenden Erfindung einen Antriebsstrang anzugeben, der die Funktionalitäten eines Mildhybrids erfüllt und der zumindest zeitweise auch einen rein elektrischen Antrieb des Fahrzeugs ermöglicht. Gleichzeitig sollen die für die genannten Funktionalitäten erforderlichen Komponenten auf einfache Weise in einen herkömmlichen Antriebsstrang eines Kraftfahrzeugs mit lediglich einer Verbrennungskraftmaschine integrierbar sein.

Die Lösung dieser Aufgabe erfolgt durch einen Antriebsstrang mit den Merkmalen des Anspruchs 1.

Mit anderen Worten ist erfindungsgemäß vorgesehen, dass die Verbrennungskraftmaschine und die elektrische Maschine über separate Koppeleinheiten mit der Antriebswelle verbindbar sind, so dass in verschiedenen Fahrsituationen unterschiedliche Konfigurationen des Antriebsstrangs bereitgestellt werden können. Grundsätzlich ist es möglich, dass sowohl die Verbrennungskraftmaschine als auch die elektrische Maschine selektiv und unabhängig voneinander mit der Antriebswelle verbunden werden können. Es hat sich allerdings als vorteilhaft erwiesen, wenn die Kopplungseinrichtung so ausgebildet ist, dass die Verbrennungskraftmaschine nur dann mit der Antriebswelle koppelbar ist, wenn auch die elektrische Maschine über die zweite Koppeleinheit mit der Antriebswelle verbunden ist.

Durch die automatisch wirkende Kupplung ist der erfindungsgemäße Antriebsstrang zuverlässig betreibbar. Durch sie wird sichergestellt, dass die Koppeleinheiten auch ohne äußeres Zutun gekoppelt werden, wenn bestimmte Betriebsparameter vorliegen. Erfindungsgemäß findet die Kopplung der Koppeleinheiten in Abhängigkeit von einem Unterschied zwischen einer Drehzahl der Verbrennungskraftmaschine und einer Drehzahl der elektrischen Maschine statt. Durch diese Ausgestaltung werden die Verbrennungskraftmaschine und die elektrische Maschine bei einem Vorliegen geeigneter Bedingungen miteinander gekoppelt, beispielsweise um dann gemeinsam zum Antrieb des Fahrzeugs beitragen zu können. Denkbar ist auch, dass in einem gekoppelten Zustand der Koppeleinheiten durch die Arbeitsleistung der Verbrennungskraftmaschine sowohl ein Antrieb des Fahrzeugs erfolgt als auch durch einen generatorischen Betrieb der elektrischen Maschine elektrische Energie erzeugt wird, die für den Betrieb von Nebenaggregaten und/oder zum Laden eines Energiespeichers genutzt wird.

Die Integration der elektrischen Maschine in einen herkömmlichen Antriebsstrang kann auf einfache Weise durchgeführt werden, da lediglich die Kopplungseinrichtung und die elektrische Maschine eingefügt werden muss. Erfindungsgemäß ist die Kopplungseinrichtung in ein Anfahrelement und in einen Torsionsschwingungsdämpfer integriert.

Weitere Ausführungsformen der Erfindung sind in der Beschreibung, den Ansprüchen und den beigefügten Zeichnungen angegeben.

Gemäß einer Ausführungsform ist die Kupplung derart ausgestaltet, dass die erste Koppeleinheit mit der zweiten Koppeleinheit antriebswirksam gekoppelt ist, wenn die Drehzahl der Verbrennungskraftmaschine im Wesentlichen gleich oder größer als die Drehzahl der elektrischen Maschine ist. Mit anderen Worten wird eine Kopplung zwischen der ersten und der zweiten Koppeleinheit erst dann hergestellt, wenn die Verbrennungskraftmaschine zumindest die gleiche Drehzahl wie die elektrische Maschine aufweist. Dies ist beispielsweise in Situationen vorteilhaft, in denen das Kraftfahrzeug zunächst rein elektrisch betrieben wird - etwa in einer Anfahrsituation - und der Verbrennungsmotor erst später zugeschaltet wird. Solange der Verbrennungsmotor noch nicht mit der erforderliche Drehzahl dreht, ist er noch nicht mit der zweiten Koppeleinheit - und damit mit der Antriebswelle - verbunden. Erst bei Drehzahlgleichheit findet eine - zumindest teilweise - Leistungsübergabe von der elektrischen Maschine auf die Verbrennungskraftmaschine statt. Die elektrische Maschine kann jedoch weiterhin mit der Antriebswelle verbunden sein, um bei Bedarf zusätzliches Antriebsdrehmoment bereitstellen zu können und dadurch die Verbrennungskraftmaschine zu entlasten.

Die erste Koppeleinheit, die zweite Koppeleinheit und/oder die Kupplung können koaxial angeordnet sein. Alternativ oder zusätzlich kann vorgesehen sein, dass die Verbrennungskraftmaschine und/oder die elektrische Maschine koaxial zu der ersten Koppeleinheit und der zweiten Koppeleinheit angeordnet sind.

Erfindungsgemäß ergibt sich eine kompakte Bauform des Antriebsstrangs, wenn die Drehachse der elektrischen Maschine versetzt zu der Drehachse der Verbrennungskraftmaschine angeordnet ist.

Gemäß einer Ausführungsform ist die Kupplung eine Freilaufeinrichtung. Die Freilaufeinrichtung ermöglicht die selektive Kopplung und Entkopplung der beiden Koppeleinheiten als Funktion des Drehzahlunterschieds der elektrischen Maschine und der Verbrennungskraftmaschine. Mit anderen Worten findet eine Kopplung zwischen den Koppeleinheiten erst dann statt, wenn bestimmte Lastverhältnisse vorliegen. Grundsätzlich sind eine Vielzahl von unterschiedlichen Konstruktionsweise von Freilaufeinrichtungen bekannt, die je nach Bedarf gewählt werden können.

Die erste Koppeleinheit kann eine erste Schwungscheibe sein und die zweite Koppeleinheit kann eine zweite Schwungscheibe sein. Die erste Schwungscheibe und die zweite Schwungscheibe weisen unterschiedliche Trägheitsmomente auf, wobei insbesondere das Trägheitsmoment der zweiten Schwungscheibe kleiner ist als das Trägheitsmoment der ersten Schwungscheibe. Diese Ausgestaltung trägt der Tatsache Rechnung, dass die in Zusammenhang mit dem Betrieb der Verbrennungskraftmaschine auftretenden Drehungleichförmigkeiten in der Regel größer sind als jene, die bei einem Betrieb einer elektrischen Maschine auftreten. Der Bedarf einer Dämpfung von Torsionsschwingungen ist daher bei der Verbrennungskraftmaschine größer als bei der elektrischen Maschine, weshalb das entsprechende Schwungrad eine höhere Massenträgheit aufweist als das der elektrischen Maschine. Die kleinere Massenträgheit des zweiten Schwungrads geht mit dem Vorteil einher, dass zu ihrer Beschleunigung weniger Energie aufgebracht werden muss. Letztlich gestattet die beschriebene Konstruktion also, dass die Kopplungseinrichtung je nach Kopplungszustand der Koppeleinheiten unterschiedliche Trägheitsmomente aufweist, so dass den jeweils vorliegenden Gegebenheiten optimal Rechnung getragen wird.

Die elektrische Maschine kann über einen Riemenantrieb, einen Kettenantrieb oder eine Zahnradverbindung antriebswirksam mit der zweiten Koppeleinheit gekoppelt sein. Gleiches gilt entsprechend für eine Kopplung der Verbrennungskraftmaschine mit der ersten Koppeleinheit.

Erfindungsgemäß sind die erste Koppeleinheit oder die zweite Koppeleinheit über ein Anfahrelement, insbesondere eine Kupplung, und eine Drehschwingungsdämpfereinrichtung mit der Antriebswelle verbunden sein. Insbesondere bilden die Koppeleinheiten Funktionselemente der Drehschwingungsdämpfereinrichtung. Beispielsweise bilden sie je nach Betriebszustand entweder einzeln oder in gekoppeltem Zustand eine der Schwungmassen eines Zweimassenschwungrads.

Eine konstruktiv einfache Integration der Kopplungseinrichtung in einen herkömmlichen Antriebsstrang kann erreicht werden, wenn die Kopplungseinrichtung zwischen der Verbrennungskraftmaschine und einem Übersetzungsgetriebe des Antriebsstrangs angeordnet ist.

Der Antriebsstrang kann einen separaten Startermotor zum Starten der Verbrennungskraftmaschine aufweisen, so dass ein Starten der Verbrennungskraftmaschine unabhängig von dem Betrieb der elektrischen Maschine möglich ist.

Insbesondere ist der Startermotor über die erste Koppeleinheit mit der Verbindungskraftmaschine verbunden. Bei einer Ausführungsform der ersten Koppeleinheit als Schwungscheibe kann ein Starterzahnkranz an ihr vorgesehen sein, der mit einem mit dem Startermotor gekoppelten Zahnrad kämmt.

Die elektrische Maschine kann als Motor oder als Generator betreibbar sein. Dadurch kann auch die Funktionalität "elektrodynamisches Bremsen" bereitgestellt werden, d.h. im Schubbetrieb des Kraftfahrzeugs, wenn also weder das Fahrpedal noch das Bremspedal betätigt werden, kann ein generatorischer Betrieb der elektrischen Maschine zur Erzeugung von elektrischer Energie genutzt werden. Die Verbrennungskraftmaschine ist in diesem Zustand abgekoppelt, da ihre Drehzahl in der genannten Situation in der Regel unterhalb der Drehzahl der Antriebswelle liegt.

Die elektrische Maschine kann direkt oder indirekt antriebswirksam mit Nebenaggregaten verbunden sein, um diese zu betreiben.

Nachfolgend wird die Erfindung rein beispielhaft anhand vorteilhafter Ausführungsformen unter Bezugnahme auf die beigefügten Zeichnungen erläutert. Es zeigen:

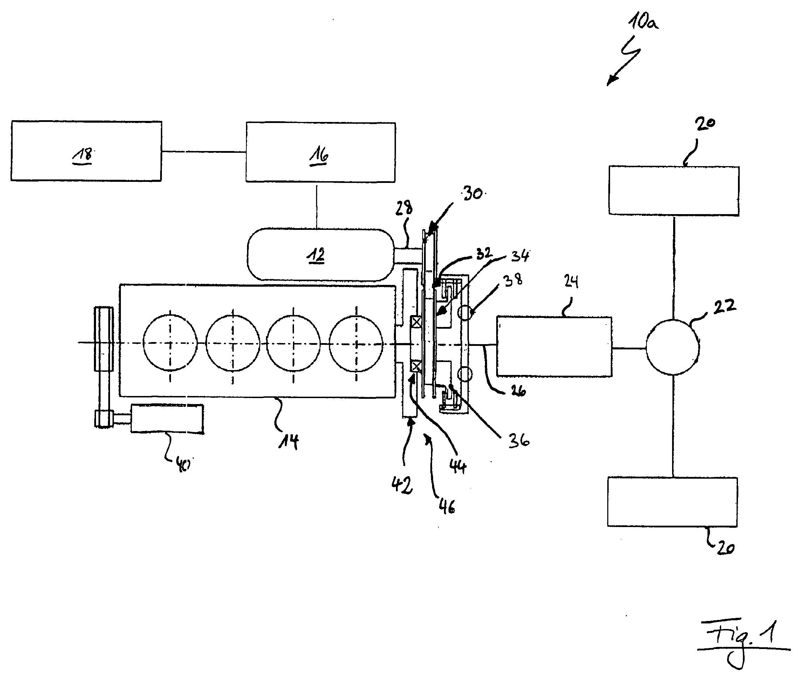

- Fig. 1 bis 6: verschiedene Ausführungsformen des erfindungsgemäßen Antriebsstrangs.

Fig. 1 zeigt einen Antriebsstrang 10a mit einer elektrischen Maschine 12 und einer Verbrennungskraftmaschine 14. Die elektrische Maschine 12 ist über einen Umrichter 16 mit einer Batterie 18 verbunden und kann - je nach Betriebszustand - diese laden oder von dieser mit Energie versorgt werden, um das Kraftfahrzeug anzutreiben.

Der Antriebsstrang 10a dient zum Antrieb von Rädern 20 einer Achse des Kraftfahrzeugs. Die Räder 20 sind über ein Differentialgetriebe 22 und ein Übersetzungsgetriebe 24 mit einer Antriebswelle 26 verbunden.

Zur Übertragung eines Antriebsdrehmoments von der elektrischen Maschine 12 auf die Antriebswelle 26 ist eine mit einer Ausgangswelle 28 der elektrischen Maschine 12 gekoppelte Riemenscheibe 30 vorgesehen, die wiederum über einen Riemen 32 mit einer Schwungscheibe 34 gekoppelt ist. Die Schwungscheibe 34 steht über ein Anfahrelement 36 selektiv mit einem mit der Antriebswelle 26 gekoppelten Torsionsschwingungsdämpfer 38 in Verbindung.

Bei einem Anfahren des Fahrzeugs wird das erforderliche Antriebsmoment lediglich durch die elektrische Maschine 12 bereitgestellt, das über die Welle 28, die Riemenscheibe 30 und den Riemen 32 auf die Schwungscheibe 34 übertragen wird. Bei geschlossenem Anfahrelement 36 kann das Fahrzeug im jeweils gewählten Gang des Übersetzungsgetriebes 24 bewegt werden. Wenn nun bei höheren Geschwindigkeiten zusätzliches Antriebsdrehmoment erforderlich ist, wird der Verbrennungskraftmotor 14 zugeschaltet. Zu diesem Zweck wird ein Startermotor 40 aktiviert, der die Verbrennungskraftmaschine 14 in Gang setzt. Da die Verbrennungskraftmaschine 14 und die Schwungscheibe 34 nicht permanent gekoppelt sind, läuft die Verbrennungskraftmaschine 14 zunächst unabhängig von den restlichen Komponenten des Antriebsstrangs 10a. Erst wenn die Verbrennungsmaschine 14 und eine mit ihr gekoppelte Schwungscheibe 42 die erforderliche Drehzahl erreicht haben, wird durch eine Freilaufeinrichtung 44 automatisch eine Kopplung zwischen den Schwungscheiben 42, 34 - und damit letztlich eine Kopplung zwischen dem Verbrennungsmotor 14 und der Antriebswelle 26 - hergestellt. Die Freilaufeinrichtung 44 ist dabei so ausgestaltet, dass eine Kopplung der Schwungscheiben 34, 42 erst dann hergestellt wird, wenn die Verbrennungskraftmaschine 14 die elektrische Maschine 12 "überholt", d.h. wenn die Drehzahl der Verbrennungskraftmaschine 14 zumindest gleich groß wie die der elektrischen Maschine 12 ist.

Die unterschiedlichsten Arten von Freilaufeinrichtungen, die beispielsweise Klemmkörper, Sperrklinken, Zahnscheiben oder Schlingfedern umfassen, können zum Einsatz gelangen. Welche Bauform konkret verwendet wird, hängt unter anderem von den zu erwartenden Bedingungen und Lastanforderungen in dem Antriebsstrang 10a und dem zur Verfügung stehenden Bauraum ab.

Fig. 1 zeigt auch, dass sich ein herkömmlicher Antriebsstrang auf einfache Weise in den Antriebsstrang 10a verwandeln lässt. Es ist lediglich erforderlich, Bauraum für die Komponenten 12, 16 und 18 bereitzustellen sowie eine übliche Anfahrelement-Torsionsdämpfer-Kombination durch eine aus den Schwungscheiben 34, 42 und die Freilaufeinrichtung 44 bestehende Kopplungseinrichtung 46 zu ergänzen.

Eine kompakte Bauform ergibt sich, wenn die Maschinen 12, 14 nebeneinander angeordnet sind, so dass deren Drehachsen parallel verlaufen. Bei dieser Bauform sind die Verbrennungskraftmaschine 14 und die Schwungscheiben 34, 42 sowie die Freilaufeinrichtung 44 koaxial angeordnet. Die Kopplungseinrichtung 46 befindet sich - sowohl räumlich als auch funktionell gesehen - zwischen der Verbrennungskraftmaschine 14 und dem Übersetzungsgetriebe 24.

Fig. 1 ist ferner zu entnehmen, dass die Schwungscheibe 34 einen kleineren Radius als die Schwungscheibe 42 aufweist. Letztlich soll dies darauf hinweisen, dass das Trägheitsmoment der Schwungscheibe 42 größer ist als das der Schwungscheibe 34, da die durch die Verbrennungskraftmaschine 14 erzeugten Drehungleichförmigkeiten erheblich größer sind als die der elektrischen Maschine 12. Umgekehrt kann die Schwungscheibe 34 kompakter ausgeführt werden, was zu einer Effizienzsteigerung bei einem rein elektrischen Antrieb des Fahrzeugs führt, da bei Beschleunigungen des Kraftfahrzeugs nur die vergleichsweise geringe Masseträgheit der Schwungscheibe 34 überwunden werden muss.

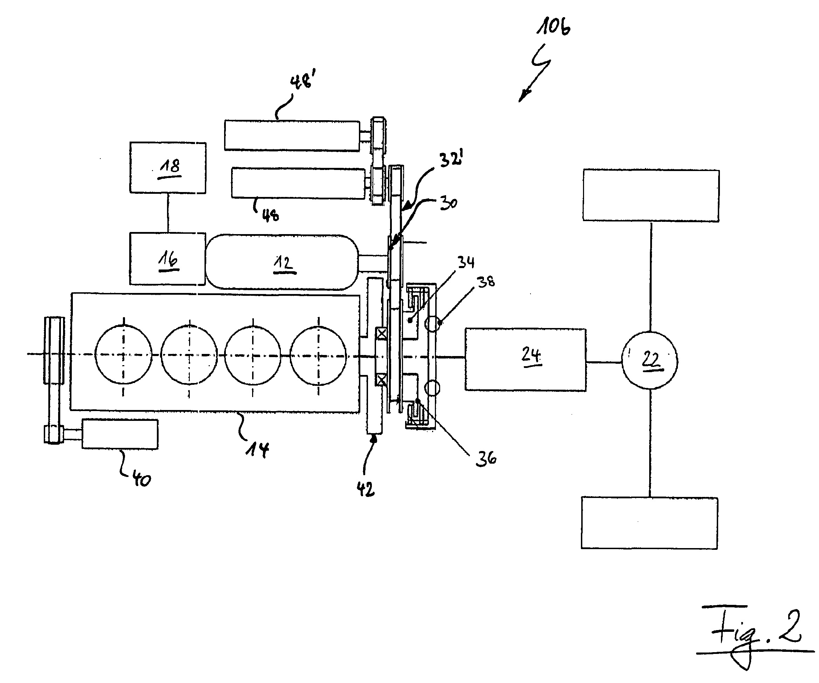

Fig. 2 zeigt einen Antriebsstrang 10b der sich von dem Antriebsstrang 10a darin unterscheidet, dass die elektrische Maschine 12 über einen zweiten Riemen 32' mit Nebenaggregaten 48, 48' verbunden ist, um diese mit Antriebsdrehmoment zu versorgen. Es versteht sich, dass anstelle separater Riemen 32, 32' ein einziger umlaufender Riemen verwendet werden kann, der die elektrische Maschine 12 sowohl mit der Schwungscheibe 34 als auch mit den Nebenaggregaten 48, 48' verbindet.

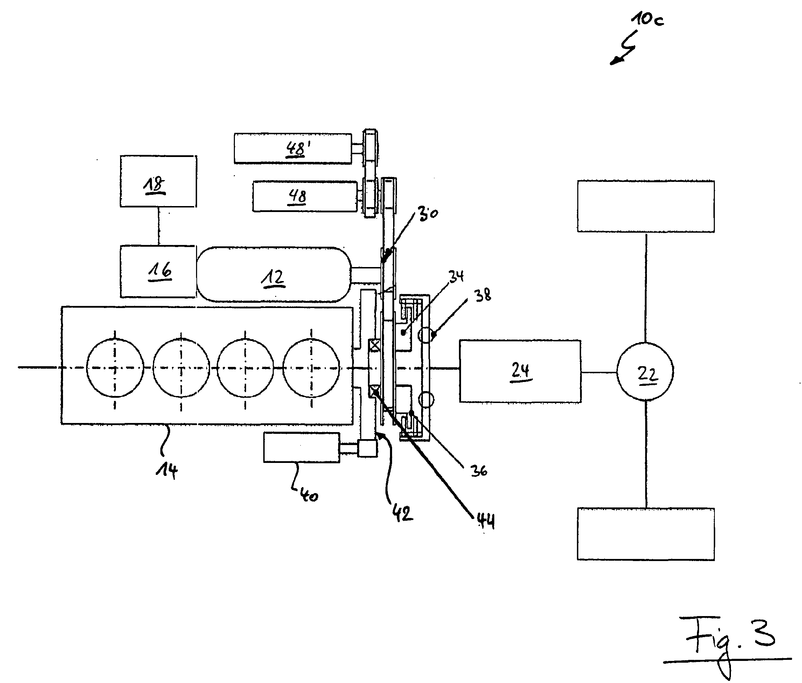

In Abwandlung des Antriebsstrangs 10b ist der Startermotor 40 des in Fig. 3 gezeigten Antriebsstrangs 10c nicht über einen Riementrieb an der der Schwungscheibe 42 abgewandten Seite der Verbrennungskraftmaschine 42 mit dieser gekoppelt. In der vorliegenden Ausgestaltung wirkt er direkt mit der Schwungscheibe 42 zusammen, um die Verbrennungskraftmaschine 14 bei Bedarf zu starten. Zu diesem Zweck ist an der Schwungscheibe 42 ein verzahnter Starterkranz angebracht, der mit einem von dem Startermotor 40 antreibbaren Zahnrad kämmt.

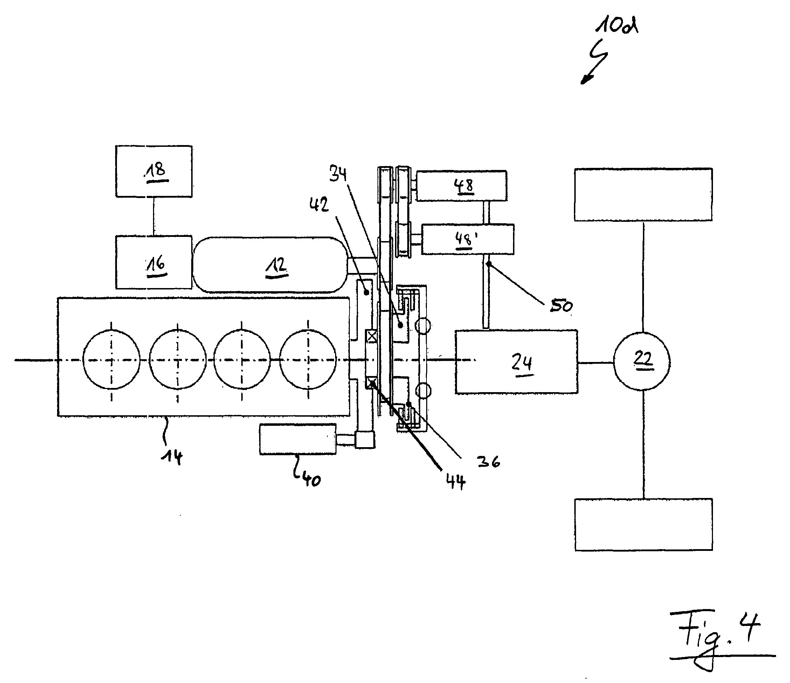

Fig. 4 zeigt eine Abwandlung 10d des Antriebsstrangs 10c, bei der die Nebenaggregate 48, 48' nicht nur mit der elektrischen Maschine 12, sondern auch über eine Verbindung 50 mit dem Übersetzungsgetriebe 24 gekoppelt sind.

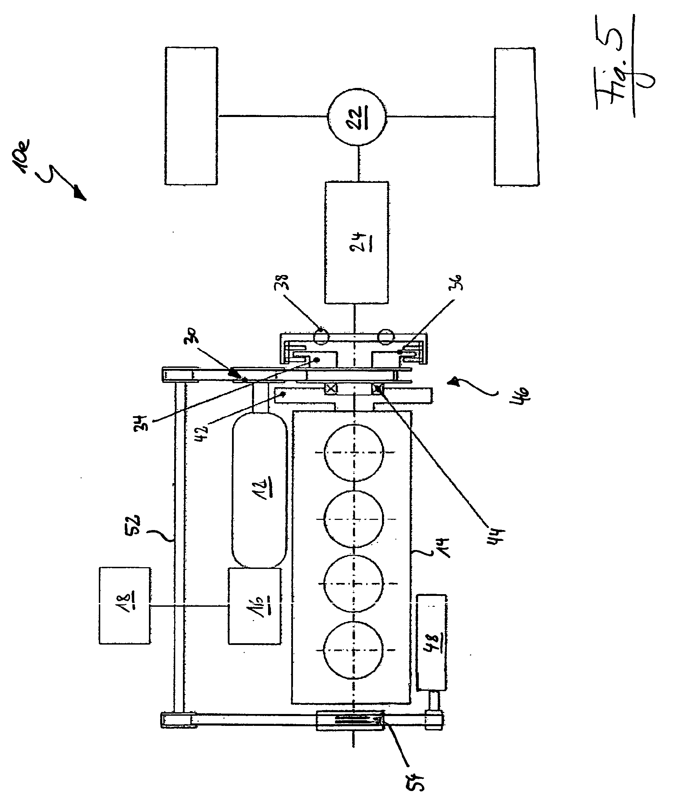

Fig. 5 zeigt einen Antriebsstrang 10e, der hinsichtlich der Ausgestaltung der Kopplungseinrichtung 46 im Wesentlichen den Antriebssträngen 10a bis 10d entspricht. Die elektrische Maschine 12 ist jedoch über eine Hilfswelle 52 mit Hilfe einer Kupplung 54 selektiv mit dem Nebenaggregat 48 gekoppelt. Außerdem ermöglicht die Kupplung 54 ein Starten der Verbrennungskraftmaschine 14 durch die elektrische Maschine 12.

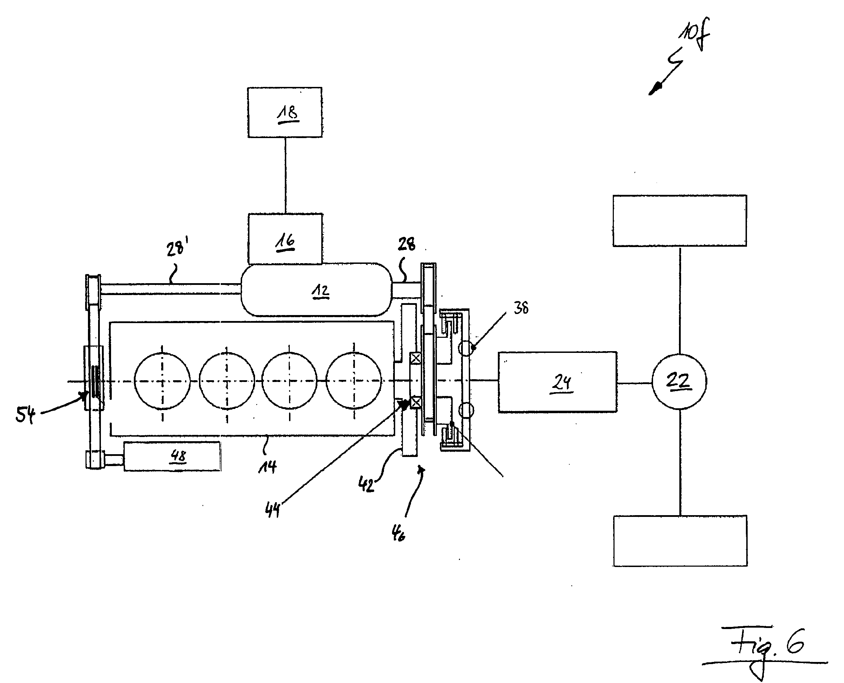

Eine Ausführungsform 10f des Antriebsstrangs unterscheidet sich - wie in Fig. 6 gezeigt - von dem Antriebsstrang 10e insbesondere dadurch, dass anstelle der Hilfswelle 52 eine zweite Ausgangswelle 28' der elektrischen Maschine 12 vorgesehen ist, die - über die Kupplung 54 - zum Starten der Verbrennungskraftmaschine 14 bzw. zum Betrieb des Nebenaggregats 48 dient.

Den vorstehend beschriebenen Ausführungsformen 10a bis 10f des Antriebsstrangs ist gemeinsam, dass sich die Vorteile einer elektrischen Maschine mit den Vorteilen einer Verbrennungskraftmaschine in einem Antriebsstrang auf einfache Weise kombinieren lassen, ohne dass umfangreiche Änderungen im grundlegenden Aufbau eines herkömmlichen Antriebsstrangs notwendig sind. Die Integration der elektrischen Maschine 12 wird auf effiziente Weise durch die Kopplungseinrichtung 46 ermöglicht, die außerdem eine zuverlässige und effiziente Einbindung der Verbrennungskraftmaschine 14 in den Antriebsstrang 10a bis 10f ermöglicht, sobald sie eine geeignete Drehzahl erreicht hat. Diese Einbindung erfolgt automatisch über die Freilaufeinrichtung 44, so dass das Auftreten von Fehlfunktionen minimiert wird.

Die Antriebsstränge 10a bis 10f ermöglichen auch einen rein elektrischen Antrieb des Kraftfahrzeugs, wobei die Reichweite des Kraftfahrzeugs von der Kapazität der Batterie 18 abhängt. Zudem kann eine Start-Stopp-Funktionalität bereitgestellt werden, die komfortabler und effizienter als bei herkömmlichen Systemen ist. Außerdem kann die elektrische Maschine 12 direkt zur Bereitstellung von Antriebsdrehmoment für Nebenaggregate 48, 48' benutzt werden. In bestimmten Betriebszuständen kann sie auch als Generator betrieben werden, um die Batterie 18 aufzuladen und die Nebenaggregate 48, 48' mit elektrischer Energie zu versorgen.

Die elektrische Maschine 12 kann auch als elektrodynamische Bremse fungieren, so dass die Verzögerung des Fahrzeugs zur Erzeugung elektrischer Energie genutzt wird. Im Schubbetrieb dreht die Verbrennungskraftmaschine 14 langsamer als die Antriebswelle 26, so dass die Freilaufeinrichtung 44 für eine Entkopplung der Schwungscheiben 34, 42 sorgt. Das Drehmoment der Antriebswelle 26 wird somit nur auf die elektrische Maschine 12 übertragen, die dieses in elektrische Energie umwandelt.

### Bezugszeichenliste

- 10a, 10b, 10c, 10d, 10e, 10f: Antriebsstrang
- 12: elektrische Maschine
- 14: Verbrennungskraftmaschine
- 16: Umrichter
- 18: Batterie
- 20: Rad
- 22: Differentialgetriebe
- 24: Übersetzungsgetriebe
- 26: Antriebswelle
- 28, 28': Ausgangswelle
- 30: Riemenscheibe
- 32, 32': Riemen
- 34: Schwungscheibe
- 36: Anfahrelement
- 38: Torsionsschwingungsdämpfer
- 40: Startermotor
- 42: Schwungscheibe
- 44: Freilaufeinrichtung
- 46: Kopplungseinrichtung
- 48, 48': Nebenaggregat
- 50: Verbindung
- 52: Hilfswelle
- 54: Kupplung

## Patentansprüche

1. Antriebsstrang eines Kraftfahrzeugs mit einer Verbrennungskraftmaschine (14), mit einer elektrischen Maschine (12) und mit einer Kopplungseinrichtung (46), die eine erste, der Verbrennungskraftmaschine (14) zugeordnete Koppeleinheit (42) und eine zweite, der elektrischen Maschine (12) zugeordnete Koppeleinheit (34) umfasst und durch die die Verbrennungskraftmaschine (14) und/oder die elektrische Maschine (12) mit einer gemeinsamen Antriebswelle (26) zum Antrieb zumindest eines Rads (20) des Kraftfahrzeugs antriebswirksam verbindbar sind, wobei die erste Koppeleinheit (42) und die zweite Koppeleinheit (34) separate Bauteile sind, die durch eine Kupplung (44) automatisch in Abhängigkeit von einem Unterschied zwischen einer Drehzahl der Verbrennungskraftmaschine (14) und einer Drehzahl der elektrischen Maschine (12) miteinander koppelbar sind, wobei die Drehachse der elektrischen Maschine (12) versetzt zu der Drehachse der Verbrennungskraftmaschine (14) angeordnet ist und **dadurch gekennzeichnet, dass** die erste Koppeleinheit (42) oder die zweite Koppeleinheit (34) über ein Anfahrelement (36), insbesondere eine Kupplung, und eine Drehschwingungsdämpfereinrichtung (38) mit der Antriebswelle (26) verbunden ist, wobei die Kopplungseinrichtung (46) in das Anfahrelement (36) und in die Drehschwingungsdämpfereinrichtung (38) integriert ist.

2. Antriebsstrang nach Anspruch 1,
**dadurch gekennzeichnet, dass**
die Kupplung (44) derart ausgestaltet ist, dass die erste Koppeleinheit (42) mit der zweiten Koppeleinheit (34) antriebswirksam gekoppelt ist, wenn die Drehzahl der Verbrennungskraftmaschine (14) im Wesentlichen gleich oder größer als die Drehzahl der elektrischen Maschine (12) ist.

3. Antriebsstrang nach Anspruch 1 oder 2,dadurch **gekennzeich net**, dass
die erste Koppeleinheit (42), die zweite Koppeleinheit (34) und/oder der Kupplung (44) koaxial angeordnet sind.

4. Antriebsstrang nach zumindest einem der vorstehenden Ansprüche,
**dadurch gekennzeichnet, dass**
die Verbrennungskraftmaschine (14) und/oder die elektrische Maschine (12) koaxial zu der ersten Koppeleinheit (42) und der zweiten Koppeleinheit (34) angeordnet sind.

5. Antriebsstrang nach zumindest einem der vorstehenden Ansprüche,
**dadurch gekennzeichnet, dass**
die Kupplung eine Freilaufeinrichtung (44) ist.

6. Antriebsstrang nach zumindest einem der vorstehenden Ansprüche,
**dadurch gekennzeichnet, dass**
erste Koppeleinheit eine erste Schwungscheibe (42) ist und dass die zweite Koppeleinheit eine zweite Schwungscheibe (34) ist, wobei die erste Schwungscheibe (42) und die zweite Schwungscheibe (34) unterschiedliche Trägheitsmomente aufweisen, wobei insbesondere das Trägheitsmoment der zweiten Schwungscheibe (34) kleiner ist als das Trägheitsmoment der ersten Schwungscheibe (42).

7. Antriebsstrang nach zumindest einem der vorstehenden Ansprüche,
**dadurch gekennzeichnet, dass**
die elektrische Maschine (12) über einen Riementrieb, einen Kettentrieb oder eine Zahnradverbindung antriebswirksam mit der zweiten Koppeleinheit (34) gekoppelt ist und/oder dass die Verbrennungskraftmaschine (14) über einen Riementrieb, einen Kettentrieb oder eine Zahnradverbindung antriebswirksam mit der ersten Koppeleinheit (42) gekoppelt ist.

8. Antriebsstrang nach zumindest einem der vorstehenden Ansprüche,
**dadurch gekennzeichnet, dass**
die Kopplungseinrichtung (46) zwischen der Verbrennungskraftmaschine (14) und einem Übersetzungsgetriebe (24) des Antriebsstrangs angeordnet ist.

9. Antriebsstrang nach zumindest einem der vorstehenden Ansprüche,
**dadurch gekennzeichnet, dass**
der Antriebsstrang einen separaten Startermotor (40) zum Starten der Verbrennungskraftmaschine (14) aufweist.

10. Antriebsstrang nach Anspruch 11,
**dadurch gekennzeichnet, dass**
der Startermotor (40) über die erste Koppeleinheit (42) mit der Verbrennungskraftmaschine (14) gekoppelt ist.

11. Antriebsstrang nach zumindest einem der vorstehenden Ansprüche,
**dadurch gekennzeichnet, dass**
die elektrische Maschine (12) als Motor oder als Generator betreibbar ist.

12. Antriebsstrang nach zumindest einem der vorstehenden Ansprüche,
**dadurch gekennzeichnet, dass**
die elektrischen Maschine (12) direkt oder indirekt antriebswirksam mit Nebenaggregaten (48, 48') verbunden ist, um diese zu betreiben.

## Claims

1. Drive train of a motor vehicle with an internal combustion engine (14), with an electric motor (12) and with a coupling device (46) which comprises a first coupling unit (42) allocated to the internal combustion engine (14) and a second coupling unit (34) allocated to the electric motor (12) and by means of which the internal combustion engine (14) and/or the electric motor (12) can be connected for drive purposes with a common drive shaft (26) to drive at least one wheel (20) of the motor vehicle, wherein the first coupling unit (42) and the second coupling unit (34) are separate components which can be coupled together automatically by a clutch (44) depending on a difference between a rotation speed of the internal combustion engine (14) and a rotation speed of the electric motor (12), wherein the rotation axis of the electric motor (12) is arranged offset to the rotation axis of the internal combustion engine (14) and **characterized in that** the first coupling unit (42) or the second coupling unit (34) is connected with the drive shaft (26) via a starter element (36), in particular a clutch, and a rotational vibration damper device (38), wherein the coupling device (46) is integrated in the starter element (36) and in the rotational vibration damper device (38).

2. Drive train according to Claim 1, **characterized in that** the clutch (44) is designed such that the first coupling unit (42) is coupled for drive purposes with the second coupling unit (34) when the rotation speed of the internal combustion engine (14) is substantially equal to or greater than the rotation speed of the electric motor (12).

3. Drive train according to Claim 1 or 2, **characterized in that** the first coupling unit (42), the second coupling unit (34) and/or the clutch (44) are arranged coaxially.

4. Drive train according to at least one of the preceding claims, **characterized in that** the internal combustion engine (14) and/or the electric motor (12) are arranged coaxial to the first coupling unit (42) and the second coupling unit (34).

5. Drive train according to at least one of the preceding claims, **characterized in that** the clutch is an overrun device (44).

6. Drive train according to at least one of the preceding claims, **characterized in that** the first coupling unit is a first flywheel (42) and the second coupling unit is a second flywheel (34), wherein the first flywheel (42) and the second flywheel (34) have different moments of inertia, wherein in particular the moment of inertia of the second flywheel (34) is less than the moment of inertia of the first flywheel (42).

7. Drive train according to at least one of the preceding claims, **characterized in that** the electric motor (12) is coupled for drive purposes with the second coupling unit (34) via a belt drive, a chain drive or a gear connection, and/or that the internal combustion engine (14) is coupled for drive purposes with the first coupling unit (42) via a belt drive, a chain drive or a gear connection.

8. Drive train according to at least one of the preceding claims, **characterized in that** the coupling device (46) is arranged between the internal combustion engine (14) and a translation gear (24) of the drive train.

9. Drive train according to at least one of the preceding claims, **characterized in that** the drive train comprises a separate starter motor (40) to start the internal combustion engine (14).

10. Drive train according to Claim 11, **characterized in that** the starter motor (40) is coupled with the internal combustion engine (14) via the first coupling unit (42).

11. Drive train according to at least one of the preceding claims, **characterized in that** the electric motor (12) can be operated as a motor or as a generator.

12. Drive train according to at least one of the preceding claims, **characterized in that** the electric motor (12) is connected for drive purposes directly or indirectly with ancillary assemblies (48, 48') in order to operate these.

## Revendications

1. Chaîne cinématique d'un véhicule automobile avec un moteur à combustion interne (14), avec un moteur électrique (12) et avec un dispositif de couplage (46), qui comprend une première unité de couplage (42) associée au moteur à combustion interne (14) et une deuxième unité de couplage (34) associée au moteur électrique (12) et par lesquelles le moteur à combustion interne (14) et/ou le moteur électrique (12) peuvent être couplés en entraînement actif à un arbre d'entraînement commun (26) pour l'entraînement d'au moins une roue (20) du véhicule automobile, dans laquelle la première unité de couplage (42) et la deuxième unité de couplage (34) sont des composants séparés, qui peuvent être couplés l'un à l'autre par un embrayage (44) automatiquement en fonction d'une différence entre une vitesse de rotation du moteur à combustion interne (14) et une vitesse de rotation du moteur électrique (12), dans laquelle l'axe de rotation du moteur électrique (12) est disposé de façon décalée par rapport à l'axe de rotation du moteur à combustion interne (14), et **caractérisée en ce que** la première unité de couplage (42) ou la deuxième unité de couplage (34) est reliée à l'arbre d'entraînement (26) par un élément de démarrage (36), en particulier un embrayage, et un dispositif amortisseur des oscillations de rotation (38), dans laquelle le dispositif de couplage (46) est intégré dans l'élément de démarrage (36) et dans le dispositif amortisseur des oscillations de rotation (38).

2. Chaîne cinématique selon la revendication 1, **caractérisée en ce que** l'embrayage (44) est configuré de telle manière que la première unité de couplage (42) soit couplée en entraînement actif à la deuxième unité de couplage (34), lorsque la vitesse de rotation du moteur à combustion interne (14) est essentiellement égale ou supérieure à la vitesse de rotation du moteur électrique (12).

3. Chaîne cinématique selon la revendication 1 ou 2, **caractérisée en ce que** la première unité de couplage (42), la deuxième unité de couplage (34) et/ou l'embrayage (44) sont disposés de façon coaxiale.

4. Chaîne cinématique selon au moins une des revendications précédentes, **caractérisée en ce que** le moteur à combustion interne (14) et/ou le moteur électrique (12) sont disposés de façon coaxiale par rapport à la première unité de couplage (42) et à la deuxième unité de couplage (34).

5. Chaîne cinématique selon au moins une des revendications précédentes, **caractérisée en ce que** l'embrayage est un dispositif à roue libre (44).

6. Chaîne cinématique selon au moins une des revendications précédentes, **caractérisée en ce que** la première unité de couplage est un premier volant moteur (42) et **en ce que** la deuxième unité de couplage est un deuxième volant moteur (34), dans laquelle le premier volant moteur (42) et le deuxième volant moteur (34) présentent des moments d'inertie différents, dans laquelle en particulier le moment d'inertie du deuxième volant moteur (34) est inférieur au moment d'inertie du premier volant moteur (42).

7. Chaîne cinématique selon au moins une des revendications précédentes, **caractérisée en ce que** le moteur électrique (12) est couplé en entraînement actif à la deuxième unité de couplage (34) par un entraînement à courroie, un entraînement à chaîne ou une liaison par roues dentées et/ou **en ce que** le moteur à combustion interne (14) est couplé à la première unité de couplage (42) par un entraînement à courroie, un entraînement à chaîne ou une liaison par roues dentées.

8. Chaîne cinématique selon au moins une des revendications précédentes, **caractérisée en ce que** le dispositif de couplage (46) est disposé entre le moteur à combustion interne (14) et un engrenage de transmission (24) de la chaîne cinématique.

9. Chaîne cinématique selon au moins une des revendications précédentes, **caractérisée en ce que** la chaîne cinématique présente un moteur de démarrage séparé (40) pour le démarrage du moteur à combustion interne (14).

10. Chaîne cinématique selon la revendication 11, **caractérisée en ce que** le moteur de démarrage (40) est couplé au moteur à combustion interne (14) par la première unité de couplage (42).

11. Chaîne cinématique selon au moins une des revendications précédentes, **caractérisée en ce que** le moteur électrique (12) peut fonctionner en moteur ou en générateur.

12. Chaîne cinématique selon au moins une des revendications précédentes, **caractérisée en ce que** le moteur électrique (12) est relié en entraînement actif, directement ou indirectement à des ensembles auxiliaires (48, 48'), afin de les entraîner.
